# EUROPEAN PATENT SPECIFICATION

(11) **EP 1 780 964 B1**
(45) Date of publication and mention of the grant of the patent: **16.12.2009**
(21) Application number: 06255547.9
(22) Date of filing: 27.10.2006
(51) Int. Cl.: H04L 12/58

(54) **Telecommunications services apparatus and methods**
Telekommunikationsdienstevorrichtungen und Verfahren
Dispositifs et procédés pour services de télécommunications

(30) Priority: 28.10.2005 GB 0521970
(43) Date of publication of application: 02.05.2007
(73) Proprietor: INTELLPROP LIMITED, Guernsey, Channel Islands (GB)
(72) Inventor: Wilson, Jeffrey, Southhampton SO31 9HN (GB)
(74) Representative: Robinson, Simon John

(56) References cited:
- WO-A-00/48377
- WO-A2-01/58172
- WO-A2-99/12364
- US-A1- 2001 028 709

## Description

### Field of Invention

The present invention relates to telecommunications services apparatus and related methods, and in particular, but not exclusively, to text communication and voice communication in mobile telecommunication networks.

### Background to the Invention

At present there is no straightforward way for most mobile telephone users to send a voice or a text message to a known e-mail address. Some telephones are adapted to send text or MMS using e-mail facilities and GPRS, but the user interface is usually too complex for most users. In any case, of those telephones that are capable of that functionality, few are set up to actually be able to achieve that. This is because most mobile telephone handsets are either purchased as upgrades to an existing subscription, or obtained second-hand, rather than being supplied by an operator outlet along with a new subscription. Consequently, to correctly configure a handset to suit the network operator and the user's personal POP and SMTP email settings or webmail settings for e-mail operation requires significant effort, and in most cases is never done.

E-mail is a ubiquitous means for reception of communications. Most people, over a wide age range, already have an active e-mail address.

E-mail can be used to receive text or voice communications. Voice can be delivered as an attached audio file which can be opened and listened to by a recipient without special software.

E-mail can also be used to receive video material. At present the current numbers of mobile telephone video users is relatively small so a prospective video sender using a 3G video mobile network has a limited number of prospective video recipients.

WO 01/58172 discloses a communication system in which a sender specifies a device of a recipient to which communication data is to be sent. However, it is the potential recipient of a telecommunication, not the sender, who can alter the contact details.

WO 99/12364 discloses a communication system in which a text message can be delivered in e-mail form. However, the user is required to use one address in a setting-up procedure and a different address to which text messages are sent.

### Statements of Invention

According to one aspect of the invention there is provided telecommunications services apparatus comprising a data processor, the apparatus being configured to receive in a setting-up procedure a control signal which is sent to a service address, which signal causes the data processor to associate e-mail address identification data, comprising a user identifier, with at least one e-mail address, and the apparatus being further configured such that, in subsequent use, on a user sending a telecommunication to the service address, which is to be delivered in e-mail form, the apparatus receives the e-mail address identification data which the data processor then uses to determine the at least one e-mail address.

According to another aspect of the invention there is provided a method of causing a telecommunication to be delivered in e-mail form, the method comprising sending a control signal to a service address, the control signal causing a data processor to associate e-mail address identification data, comprising a user identifier, with at least one e-mail address, and the method further comprising sending a telecommunication, which is to be delivered in e-mail form, together with e-mail address identification data, to the service address, and the method comprising determining the at least one associated e-mail address.

One embodiment of the invention may be viewed as a telecommunications service for allowing a user to send a telecommunication comprising textual, graphic and/or audio material to be delivered to a recipient in e-mail form , which telecommunication is in the form of at least one of a text message, a picture message, a video message, a multi-media message and a voice call, wherein the service comprises allowing a user use of at least one address string which serves as an e-mail service identifier, and the user is able to associate a prospective recipient's e-mail address with e-mail address identification data, comprising a user identifier, by way of an initial set-up procedure, such that the telecommunication when sent to a dialled address comprising the e-mail service identifier will cause the textual, graphic and/or audio material of the telecommunication to be sent to the recipient in e-mail form.

### Brief Description of the Drawings

Various embodiments of the invention will now be described, by way of example only, with reference to the accompanying drawings in which:
**Figure 1** is a schematic representation of a telecommunications network comprising a first and second embodiment of the invention,
**Figure 2** is a schematic representation of a telecommunications network comprising a third embodiment of the invention, and
**Figure 3** is a flow diagram of various method steps implementing an embodiment of the invention.

### Description of Exemplary Embodiments of the Invention

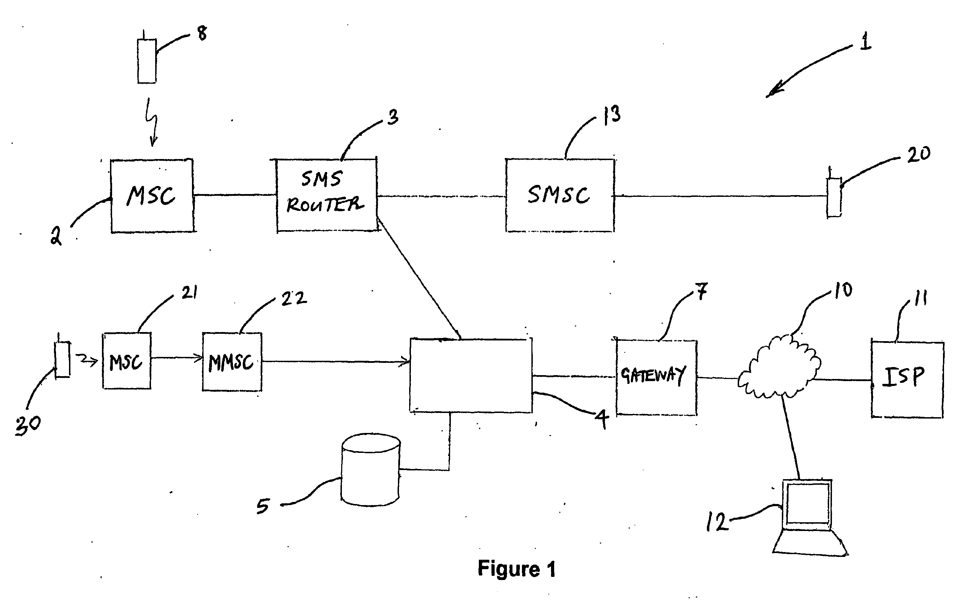

Figure 1 shows a mobile telecommunications network 1 which is adapted to provide a service in which a sender of at least one of a text message (for example an SMS message), a picture message, a video message and a multi-media message (MMS) is able to send that message such that textual, graphic and/or audio material therein is delivered to a recipient in the form of an e-mail.

The network 1 comprises an MSC (Mobile Switching Centre) 2, an SMS Router 3, telecommunications services equipment 4, and a data storage assembly 5 and an e-mail gateway 7.

In the illustrated embodiment, an initial set-up procedure is required in which a user causes an email address of a prospective recipient to be associated with the user's CLI (Caller Line Identity). This is achieved by the user sending a text message in a predefined syntax from his handset 8 to the address '*', where the body of the message contains at least a definition of the email address. For example the user sends a text message comprising the text:
'=john.smith@company.domain.com' to address'*'.

The message is received at the MSC 2 from where it is detected and intercepted in the MO (Mobile Originated) path, by the SMS Router 3. On recognising the '*' address the SMS Router 3 is operative to send the message to the equipment 4. On receipt of the message the equipment 4 recognises the syntax of the ' =' symbol and determines that for the purposes of the service the user requires to associate his CLI with the e-mail address stated after the '=' symbol. The equipment 4 is operative to store in the data storage assembly 5 the association between the user's CLI and the e-mail address.

In use the network 1 operates as follows. A user wishes that a text message be received by a recipient, John Smith, in the form of an e-mail. Once the message has been composed the user sends the message to the destination address (which symbol may be described as an e-mail service identifier) '*', ie a destination address consisting of a single star symbol. This is not a suffix or a prefix, but the entirety of the dialled string entered on the user's handset.

After passing via the MSC 2 the message is intercepted by the SMS Router 3 which recognises the destination address consisting of a '*' symbol. This recognition step is achieved in a known way by the SMS Router 3 'unpacking' the Transport Protocol Data Unit (TPDU) to extract the dialled address therefrom. The message and the CLI are then routed to the equipment 4. The equipment 4 then determines the user's CLI and retrieves from a database in the data storage assembly 5 by way of a look-up operation the associated e-mail address for John Smith. The message and the e-mail address is then sent to the gateway 7 wherein the message is converted into the form of an e-mail with the e-mail address 'john.smith@company.domain.com'. The e-mail is then sent via the Internet 10 and to the respective Internet Service Provider (ISP) 11, from where the e-mail can be sent to the user's e-mail account accessible on a computer terminal 12.

It will be appreciated that the equipment 4 using the database stored in the data storage assembly 5 determines an association between the use of the user's CLI and e-mail address of the recipient. In this embodiment it will also be appreciated that use of the dialled address string consisting of a '*' symbol serves both to identify that the e-mail service is required and (by use of the user's CLI) to identify a predetermined e-mail address (ie it is an e-mail address identifier and an e-mail service identifier).

If no associated e-mail address is located in the database for the user's CLI then the message is rejected back to the handset 8, and/or an error or help message is sent to the handset 8.

Reply paths are enabled by providing a header portion of the e-mail sent to the recipient with a suitable return address, which preferably directs the reply via the equipment 4.

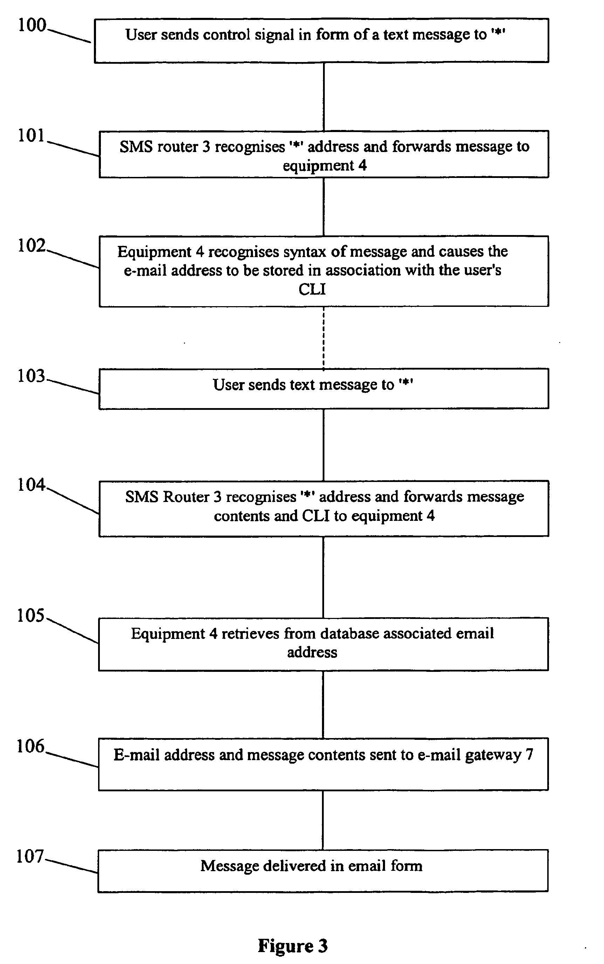

Figure 3 shows some of the various process steps 100 to 107 involved in the above described embodiment.

Although use of a single '*' symbol is described above there are numerous other forms of possible e-mail service identifiers for the service, including multiple '*' symbols eg '***', a numeric short code, eg '301', a combination of one of more number characters and one or more '*' symbols, eg '***10', and a long number eg '07070 123456' (which could optionally also be a virtual mobile number).

In the case of a short code format, comprising say six or less numeric characters, or a combination of up to six characters comprising numeric characters and '*' symbols, each user of the service could be afforded a dialled address syntax for the service which allows a user to associate multiple different e-mail addresses of one or more prospective recipients with one or more respective destination identifiers. For example, the dialled address string range 301 to 309 would allow a user to assign each of the (nine) addresses in the range to a different e-mail address. The same functionality could be offered by use of a combination of one or more '*' symbols followed by one or more numeric characters. For example, a range of '***1' through to '***9' could be available to each user. Advantageously the one or more numeric characters following the one or more '*' symbols could, for convenience, correspond to an extension number which is used to reach the same recipient on a PABX.

In the situation of a user having stored multiple email addresses, the equipment 4 locates the required e-mail address by way of first using the user's CLI, and then using the destination identifier to determine which of the stored e-mail addresses is required in that instance.

More particularly, in the case of the dialled string syntax (ie the address dialled by the user) comprising one or more '*' symbols combined with one or more numeric characters, the one or more '*' symbols would initially be recognised by the SMS router 3 as the e-mail service identifier. Accordingly the message contents, the CLI and the one or more numeric characters following the one or more '*' symbols are sent to the equipment 4. The one or more numeric characters (eg '301') is/are the destination identifier/s since they provide an indication of which e-mail address is required. The destination identifier and the user's CLI constitute e-mail address identification data. On receipt of the aforementioned data, the equipment 4 uses the combination of the CLI and the destination identifier to determine from a look-up table in the data storage assembly 5 the required e-mail address. It will be appreciated that once the SMS router 3 has recognised the one or more '*' symbols, no further use need be made thereof.

In the scenario of the dialled address string syntax comprising a range of purely numeric characters (eg 301 to 309), the SMS router 3 is configured to recognise one or more of the initial digits, for example '30', which serves/serve as the e-mail service identifier. On recognising the e-mail service identifier, the SMS router 3 is then operative to send to the equipment 4 the message contents, the user's CLI and at least the remaining digit/digits of the dialled string (or data representative thereof). In this example the latter element of the data sent to the equipment 4 comprises one of the numerals in the range 1 to 9, which can then be used in combination with the user's CLI to determine the required e-mail address. Whichever of the numerals 1 to 9 (or data representative thereof) which is sent to the equipment 4 may be described as a destination identifier.

It will be appreciated that the SMS router 3 may be configured to recognise the whole of the dialled address string in order to determine that the e-mail service is required. For example the SMS router 3 may be programmed to recognise a dialled address string consisting of three numerals which must be one of a range, say 301 to 309. In such an arrangement the whole of the dialled address string may be considered to serve as the e-mail service identifier. Once recognised the SMS router may then send only that or those part/s of the string to the equipment 4 which enable the required e-mail address to be located, eg one of the numerals in the range 1 to 9 (or a representation thereof).

Similarly, with regard to a long number syntax (eg '07070 123456') the SMS router may be configured to recognise a part or the whole of the dialled address string as an e-mail service identifier, and then send to the equipment 4, inter alia, that part or parts of the dialled string which are indicative of a particular e-mail address. One advantage of using one or more long numbers is that such numbers can be used while roaming in another network, whereas short codes usually cannot be so used.

In one embodiment however both short and long numbers are capable of being used, and it may be arranged that the last few digits of the long number would match the short number.

It will be appreciated that the equipment 4 may be configured to allow a user to associate multiple e-mail addresses with a destination identifier so that any text message sent in relation that destination identifier will be sent to all of the e-mail addresses associated with that use of that destination identifier. Suitable syntax would allow a user to initially associate multiple e-mail addresses with the destination identifier. Such syntax may comprise use of the ' =' sign in the following manner:
'=john.smith@company.domain.com; helen.jones@company.domain.com ;peter.williams@company2.domain.com'

Use of that syntax in a text message sent to a predetermined dialled address string (eg ***301) will associate all of those e-mail addresses with the destination identifier (and/or a user identifier) in the database stored in the first database storage assembly 5.

If a user wishes to incorporate an additional e-mail address for the e-mail service, the user may send a text message from his handset 8 to a dialled address string in the following form:
' + mary.black@company.domain.com'

If the user has multiple destination identifiers at his disposal then the dialled address string would include the appropriate destination identifier(s).

The ' +' symbol is recognised by the equipment 4 so that the e-mail address is added to the database in the first storage assembly 5 in association with the destination identifier and/or the user identifier. In this way the user may associate his own e-mail address to ensure that he has a copy of the message sent. The '-' symbol may be used in a similar way to remove one or more e-mail addresses from being associated with a particular destination identifier. The '?' symbol may be used to query the current settings.

In one embodiment, a dialled string consisting of say '***' would enable a user to send a message, received as an e-mail, to the network operator or the service provider. The association between use of '***' stored in the equipment 4 would have been previously configured by the network operator and/or the service provider. On recognising the '***' address the SMS router 3 would send the message, the user's CLI and data indicative of '***' (or at least a signal indicative of the fact that the router 3 has recognised '***') to the equipment 4. The equipment 4 would then cause the message to be sent as an e-mail to a stored e-mail address of the network operator or service provider. In addition the user would be able to send messages to his personalised e-mail recipients by use of a different syntax, for example dialled strings in the range **50 to **59.

Handsets could be shipped in a condition in which one or more dialled address strings for the service have been pre-programmed into a memory of each handset. The one or more dialled address strings could be hidden from the user who may only see identifiers such as 'e-mail-1', 'e-mail-2' etc on a display of the handset.

Although it is primarily intended that a user's CLI would be used to enable (at least partial) determination of a required e-mail address associated with that specific user, in one embodiment all users are assigned one or more unique identification strings (ie a string unique to each user of the service) which, when dialled in combination with any e-mail service identifier, allows the equipment 4 to locate a required e-mail address without need to use the user's CLI. It will be appreciated that the or each unique identification string/s serves as a user identifier.

Any or all of the services described above could be provided by an operator on a subscription basis. It may be that a subscription is only required if a user requires the use of multiple destination addresses.

Although specific mention has been made to a user configuring the equipment 4 by way of text messages in a required syntax from the user's handset 8, configuration may in addition or alternatively be effected by the World Wide Web, an e-mail, a voice call (for example Touch Text as described in Patent Specification GB 2317982B) , WAP or other suitable means.

The equipment 4 may be configured to perform a number of attempts to successfully connect to the e-mail gateway 7 in the event that the connection to the gateway is temporarily unavailable or that the gateway is not functioning correctly.

It is to be appreciated that if a user sends a text message which is to be delivered as a text message in a conventional manner then the SMS Router will either deliver the message directly to its destination or forward the message to the SMSC (Short Message Service Centre) for eventual delivery to a recipient handset 20.

In an alternative embodiment the SMSC 13 is configured to receive all text messages in the MO path and to filter out to the equipment 4 those messages which have a dialled address string comprising a predetermined e-mail service identifier.

As mentioned above the network shown in Figure 1 could be used for multi-media messages to be delivered in e-mail form. Reference is made to handset 30 which sends a multi-media message with a predetermined dialled address string (the e-mail service identifier)of the service. An MSC 21 is configured to send the message to an MMSC (Multi-Media Messaging Service Centre) 22. The MMSC is configured to recognise the e-mail service identifier and accordingly send the message to the equipment 4 to be processed in an identical manner as described above in relation to text messages.

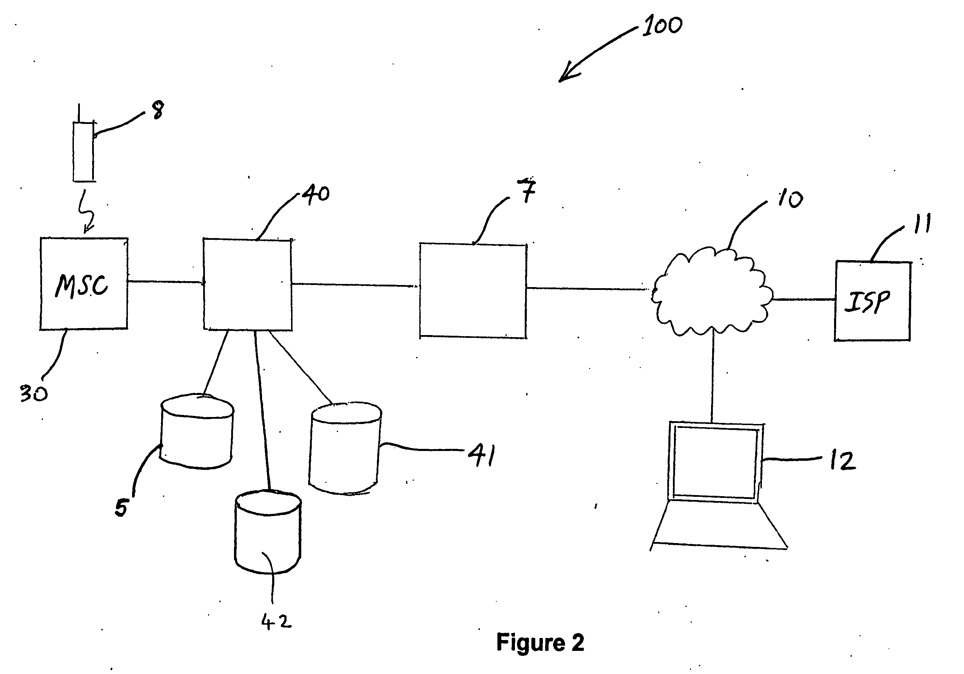

It will be appreciated that the present invention is also applicable to voice or video calls wherein a voice or video call can be delivered in e-mail format, and Figure 2 shows one way in which the present invention could be so implemented.

The network 100 shown in Figure 2 comprises an MSC 30, telecommunications services equipment 40, voice services equipment 41, video services equipment 42 and the data storage assembly 5. In one or more of the ways disclosed above in relation to text messages the user configures the data storage assembly 5 to associate with his CLI one or more e-mail addresses. In use the user uses the handset 8 and dials the predetermined address string for the service (for example consisting of '***'). The MSC 30 is programmed to recognise '***' and to send the call to the equipment 40. The call is connected to the voice services equipment 41 which prompts the user to begin speaking and a voice message is recorded by the equipment 41. The equipment 41 is also operative to retrieve the e-mail address which is associated with the user's CLI. The equipment 40 then sends the voice recording as an audio file to the e-mail gateway 7, together with the e-mail address. The e-mail gateway 7 then causes the audio file to be sent to the recipient as an attachment to an e-mail.

An optional video services unit 42 is provided to enable a video call or recorded message from the handset 8 to be received and stored, and then to send the video file to the e-mail gateway 7. This enables a sender in a 3G video network to send video material as an e-mail to recipients possessing handsets that do not have a video capability.

Although the telecommunications services equipment 4 and the telecommunications services equipment 40 are shown as separate entities in Figures 1 and 2 this need not necessarily be the case and a single equipment entity providing the required functionality of both text messages etc, and for voice calls could be provided.

Similarly, although the telecommunications services equipment 4, the SMS Router 3 are shown as separate entities in Figure 1 this need not necessarily be the case and a single/unitary equipment entity may be provided instead which provides the required functionality.

Similarly, in Figure 2 the units 40, 41 and 42 could be provided as a single equipment entity.

In the case of voice calls one embodiment allows a user to playback a voice recording made before causing the same to be delivered as an e-mail.

The various telecommunications services described above are advantageously sender-centric, in that the recipient need do nothing apart from possess an active email account. The sender pre-configures the network to associate invocation of the service with a corresponding destination email address.

Although particular reference has been made to mobile telecommunications networks, the invention can equally be implemented in fixed telecommunication networks.

## Claims

1. Telecommunications services apparatus comprising a data processor (4), the apparatus being configured to receive in a setting-up procedure a control signal from a sender which is sent to a service address, which signal is adapted to cause the data processor (4) to associate e-mail address identification data, comprising a user identifier associated to a recipient, with at least one e-mail address of the recipient, and the apparatus being further configured such that, in subsequent use, when the sender is sending a telecommunication to the service address, which is to be delivered in e-mail form to the recipient the apparatus being configured to receive the e-mail address identification data which the data processor (4) then uses to determine the at least one e-mail address of the recipient.

2. Telecommunications services apparatus as claimed in claim 1 in which the user identifier comprises a CLI, Caller Line Identity, of a telecommunications device of the user.

3. Telecommunications services apparatus as claimed in claim 1 or claim 2 in which the identification data comprises a destination identifier which, in conjunction with the user identifier, serves to identify at least one e-mail address from a plurality of stored e-mail addresses to which the user is able to send e-mail.

4. Telecommunications services apparatus as claimed in claim 3 in which the destination identifier comprises one or more numeric characters.

5. Telecommunications services apparatus as claimed in claim 4 in which the destination identifier comprises up to six numeric characters.

6. Telecommunications services apparatus as claimed in any preceding claim which is adapted, in use, to perform one or more look-up operations to determine the at least one e-mail address.

7. Telecommunications services apparatus as claimed in any preceding claim which comprises data storage means (5) which stores the at least one e-mail address and data representative of the association with the e-mail address identification data.

8. Telecommunications services apparatus as claimed in any preceding claim which is adapted to receive the control signal by way of the user sending a text message or an e-mail, or effecting a voice call.

9. Telecommunications services apparatus as claimed in any preceding claim in which comprises an SMS Router (3).

10. Telecommunications services apparatus as claimed in any preceding claim in which the e-mail address identification data comprises one or more alphanumeric characters.

11. Telecommunications services apparatus as claimed in any preceding claim in which the e-mail address identification data comprises one or more star symbols.

12. Telecommunications services apparatus as claimed in claim 11 in which the e-mail address identification data comprises at least three star symbols.

13. Telecommunications services apparatus as claimed in any preceding claim in which the e-mail address identification data comprises one or more numeric characters combined with the one or more star symbols.

14. Telecommunications services apparatus as claimed in claim 13 in which the one or more star symbols precede the one or more numeric characters.

15. Telecommunications services apparatus as claimed in any preceding claim in which e-mail address identification data is provided as at least part of the dialled address string of the service address.

16. A method of causing a telecommunication from a sender to a recipient to be delivered in e-mail form, the method comprising sending from the sender a control signal to a service address, the control signal causing a data processor (4) to associate e-mail address identification data, comprising a user identifier associated to the recipient, with at least one e-mail address of the recipient, and the method further comprising sending a telecommunication from the sender to the recipient, which is to be delivered in e-mail form, together with e-mail address identification data, to the service address, and the method comprising determining the at least one associated e-mail address of the recipient at the data processor (4).

17. A method as claimed in claim 16 wherein the telecommunication comprises at least one of a text message, a picture message, a video message, a multi-media message and a voice call.

## Patentansprüche

1. Telekommunikationsdienstevorrichtung mit einem Datenprozessor (4), wobei die Vorrichtung dazu konfiguriert ist, in einem Einstellungsvorgang ein Steuersignal von einem Sender zu erhalten, das an eine Diensteadresse gesendet wird, welches Signal dazu ausgelegt ist, den Datenprozessor (4) zu veranlassen, E-Mail-Adressen-Identifizierungsdaten, die einem Benutzeridentifizierer umfassen, der einem Empfänger zugeordnet ist, zumindest einer E-Mail-Adresse des Empfängers zuzuordnen, und wobei die Vorrichtung weiterhin so konfiguriert ist, dass sie beim nachfolgenden Einsatz, wenn der Sender eine Telekommunikation an die Diensteadresse sendet, die dem Empfänger in E-Mail-Form zuzustellen ist, die Vorrichtung dazu konfiguriert ist, die E-Mail-Adressen-Identifizierungsdaten zu empfangen, die der Datenprozessor (4) dann dazu verwendet, die zumindest eine E-Mail-Adresse des Empfängers zu bestimmen.

2. Telekommunikationsdienstevorrichtung nach Anspruch 1, bei der der Benutzeridentifizierer eine CLI, Caller Line Identity - Anschlusskennung, einer Telekommunikationseinrichtung des Benutzers umfasst.

3. Telekommunikationsdienstevorrichtung nach Anspruch 1 oder Anspruch 2, wobei die Identifizierungsdaten einen Zielidentifizierer umfassen, der in Verbindung mit dem Benutzeridentifizierer dazu dient, zumindest eine E-Mail-Adresse aus mehreren gespeicherten E-Mail-Adressen zu identifizieren, an die der Benutzer eine E-Mail senden kann.

4. Telekommunikationsdienstevorrichtung nach Anspruch 3, wobei der Zielidentifizierer ein oder mehrere numerische Zeichen umfasst.

5. Telekommunikationsdienstevorrichtung nach Anspruch 4, wobei der Zielidentifizierer bis zu sechs numerische Zeichen umfasst.

6. Telekommunikationsdienstevorrichtung nach irgendeinem vorhergehenden Anspruch, die dazu ausgelegt ist, im Gebrauch einen oder mehrere Nachschlagvorgänge durchzuführen, um die zumindest eine E-Mail-Adresse zu bestimmen.

7. Telekommunikationsdienstevorrichtung nach irgendeinem vorhergehenden Anspruch, die eine Datenspeichereinrichtung (5) umfasst, welche die zumindest eine E-Mail-Adresse und Daten, die für die Zuordnung zu den E-Mail-Adressen-Identifizierungsdaten repräsentativ sind, speichert.

8. Telekommunikationsdienstevorrichtung nach irgendeinem vorhergehenden Anspruch, die dazu ausgelegt ist, das Steuersignal dadurch zu erhalten, dass der Benutzer eine Textnachricht oder eine E-Mail sendet oder eine Sprachmitteilung bewirkt.

9. Telekommunikationsdienstevorrichtung nach irgendeinem vorhergehenden Anspruch, die einen SMS-Router (3) umfasst.

10. Telekommunikationsdienstevorrichtung nach irgendeinem vorhergehenden Anspruch, wobei die E-Mail-Adressen-Identifizierungsdaten ein oder mehrere alphanumerische Zeichen umfassen.

11. Telekommunikationsdienstevorrichtung nach irgendeinem vorhergehenden Anspruch, wobei die E-Mail-Adressen-Identifizierungsdaten ein oder mehrere Sternchensymbole umfassen.

12. Telekommunikationsdienstevorrichtung nach Anspruch 11, wobei die E-Mail-Adressen-Identifizierungsdaten zumindest drei Sternchensymbole umfassen.

13. Telekommunikationsdienstevorrichtung nach irgendeinem vorhergehenden Anspruch, wobei die E-Mail-Adressen-Identifizierungsdaten ein oder mehrere numerische Zeichen mit dem einen oder den mehreren Sternchensymbolen kombiniert umfassen.

14. Telekommunikationsdienstevorrichtung nach Anspruch 13, wobei das eine oder die mehreren Sternchensymbole vor dem einen oder den mehreren numerischen Zeichen steht/stehen.

15. Telekommunikationsdienstevorrichtung nach irgendeinem vorhergehenden Anspruch, wobei E-Mail-Adressen-Identifizierungsdaten als zumindest ein Teil der gewählten Adressensequenz der Diensteadresse bereitgestellt werden.

16. Verfahren zum Bewirken, dass eine Telekommunikation von einem Sender an einen Empfänger in E-Mail-Form zugestellt wird, wobei das Verfahren das Senden eines Steuersignals vom Sender an eine Diensteadresse umfasst, wobei das Steuersignal einen Datenprozessor (4) veranlasst, E-Mail-Adressen-Identifizierungsdaten, die einen dem Empfänger zugeordneten Benutzeridentifizierer umfassen, zumindest einer E-Mail-Adresse des Empfängers zuzuordnen, und wobei das Verfahren weiterhin das Senden einer Telekommunikation vom Sender an den Empfänger umfasst, die in E-Mail-Form zusammen mit E-Mail-Adressen-Identifizierungsdaten an die Diensteadresse zuzustellen ist, und wobei das Verfahren das Bestimmen der zumindest einen zugeordneten E-Mail-Adresse des Empfängers im Datenprozessor (4) umfasst.

17. Verfahren nach Anspruch 16, wobei die Telekommunikation zumindest eine von einer Textnachricht, einer Bildnachricht, einer Videonachricht, einer Multimedianachricht und einer Sprachmitteilung umfasst.

## Revendications

1. Appareil de services de télécommunications comprenant un processeur de données (4), l'appareil étant configuré de manière à recevoir dans une procédure d'établissement de communication un signal de commande en provenance d'un émetteur, qui est envoyé à une adresse de service, lequel signal est apte à faire en sorte que le processeur de données (4) associe des données d'identification d'adresse de courrier électronique, qui comprennent un identifiant d'utilisateur associé à un destinataire, à au moins une adresse de courrier électronique du destinataire, et l'appareil étant en outre configuré de telle sorte que, au cours d'une utilisation ultérieure, lorsque l'émetteur envoie une télécommunication à l'adresse de service, qui doit être remise sous la forme d'un message électronique au destinataire, l'appareil soit configuré de manière à recevoir les données d'identification d'adresse de courrier électronique que le processeur de données (4) utilise ensuite de manière à déterminer l'au moins une adresse de courrier électronique du destinataire.

2. Appareil de services de télécommunications selon la revendication 1, dans lequel l'identifiant d'utilisateur comprend une CLI, identité de ligne d'appelant, d'un dispositif de télécommunications de l'utilisateur.

3. Appareil de services de télécommunications selon la revendication 1 ou la revendication 2, dans lequel les données d'identification comprennent un identifiant de destination qui, en association avec l'identifiant d'utilisateur, sert à identifier au moins une adresse de courrier électronique à partir d'une pluralité d'adresses de courrier électronique stockées auxquelles l'utilisateur peut envoyer un courrier électronique.

4. Appareil de services de télécommunications selon la revendication 3, dans lequel l'identifiant de destination comprend un ou plusieurs caractères numériques.

5. Appareil de services de télécommunications selon la revendication 4, dans lequel l'identifiant de destination comprend jusqu'à six caractères numériques.

6. Appareil de services de télécommunications selon l'une quelconque des revendications précédentes, qui est apte, en service, à exécuter une ou plusieurs opérations de consultation de manière à déterminer l'au moins une adresse de courrier électronique.

7. Appareil de services de télécommunications selon l'une quelconque des revendications précédentes, qui comprend des moyens de stockage de données (5) qui stockent l'au moins une adresse de courrier électronique et des données représentatives de l'association avec les données d'identification d'adresse de courrier électronique.

8. Appareil de services de télécommunications selon l'une quelconque des revendications précédentes, qui est apte à recevoir le signal de commande grâce au fait que l'utilisateur envoie un message textuel ou un courrier électronique ou passe une communication téléphonique.

9. Appareil de services de télécommunications selon l'une quelconque des revendications précédentes, qui comprend un routeur SMS (3).

10. Appareil de services de télécommunications selon l'une quelconque des revendications précédentes, dans lequel les données d'identification d'adresse de courrier électronique comprennent un ou plusieurs caractères alphanumériques.

11. Appareil de services de télécommunications selon l'une quelconque des revendications précédentes, dans lequel les données d'identification d'adresse de courrier électronique comprennent un ou plusieurs symboles étoile.

12. Appareil de services de télécommunications selon la revendication 11, dans lequel les données d'identification d'adresse de courrier électronique comprennent au moins trois symboles étoile.

13. Appareil de services de télécommunications selon l'une quelconque des revendications précédentes, dans lequel les données d'identification d'adresse de courrier électronique comprennent un ou plusieurs caractères numériques associés au un ou aux plusieurs symboles étoile.

14. Appareil de services de télécommunications selon la revendication 13, dans lequel le ou les symboles étoile précèdent le ou les caractères numériques.

15. Appareil de services de télécommunications selon l'une quelconque des revendications précédentes, dans lequel des données d'identification d'adresse de courrier électronique sont fournies comme étant une partie au moins de la chaîne d'adresse composée de l'adresse de service.

16. Procédé provoquant la remise, sous une forme de courrier électronique, d'une télécommunication entre un émetteur et un destinataire, le procédé comprenant l'envoi par l'émetteur d'un signal de commande à une adresse de service, le signal de commande provoquant l'association, par un processeur de données (4), de données d'identification d'adresse de courrier électronique, qui comprennent un identifiant d'utilisateur, à au moins une adresse de courrier électronique du destinataire, et le procédé comprenant en outre l'envoi d'une télécommunication entre l'émetteur et le destinataire, qui doit être remise sous une forme de courrier électronique, ainsi que les données d'identification d'adresse de courrier électronique, à l'adresse de service, et le procédé comprenant une détermination de l'au moins une adresse de courrier électronique associée du destinataire dans le processeur de données (4).

17. Procédé selon la revendication 16, dans lequel la télécommunication comprend au moins l'un d'un message textuel, d'un message photo, d'un message vidéo, d'un message multimédia et d'une communication téléphonique.
